# EUROPEAN PATENT APPLICATION

(11) **EP 4 575 771 A1**
(43) Date of publication of application: **25.06.2025**
(21) Application number: 23879462.2
(22) Date of filing: 25.08.2023
(51) Int. Cl.: G06F 9/32

(54) **PROCESSOR THAT IMPLEMENTS INDIRECT ADDRESSING-STYLE CONDITIONAL JUMP INSTRUCTIONS, PROGRAM RECORDING MEDIUM, AND METHOD**

(30) Priority: 21.10.2022 JP 2022169525
(71) Applicant: Takeoka Lab Corporation, Tokyo 101-0042 (JP); Tokyo Electron Limited, Tokyo 107-6325 (JP)
(72) Inventor: TAKEOKA, Shozo, Tokyo 101-0042 (JP); KINOSHITA, Yoshio, Tokyo 107-6325 (JP)
(74) Representative: Lewis Silkin LLP
(86) International application number: PCT/JP2023/030696
(87) International publication number: WO 2024/084809

(57) **Abstract**

Provided is a processor enabling assembly code of a direct-addressing conditional-jump subroutine to be reduced. The processor includes a logic circuit executing a conditional-jump instruction of assembly code, and logically configured to: store, into an index register, an index register number that is an index to a jump-destination effective address; store jump-destination effective addresses differing from one another, or address offsets to jump-destination effective addresses differing from one another, into plural reference registers, respectively; fetch and decode a conditional jump instruction that is one instruction that quotes the index register; and then execute (S1) acquiring a jump-destination effective address or an address offset from the reference register corresponding to the index register number of the content of the index register and (S2) setting the acquired jump-destination effective address, or a jump-destination effective address calculated from the address offset, to a register serving as the program counter.

## Description

### [Technical Field]

The present disclosure relates to the technology for a processor that executes a conditional jump instruction. In particular, the present disclosure relates to the technology for RISC (Reduced Instruction Set Computer) architecture.

Priority is claimed on Japanese Patent Application No. JP2022-169525 filed on October 21, 2022 under the Paris Convention, and the content of the Japanese Patent Application Publication is incorporated herein by reference under PCT Rule 20.6.

### [Background Art]

A RISC represents a computer designed as a reduced instruction set architecture. In particular, the RISC represents a computer that restricts the total number, the number of types, and the formats of instructions and simplifies the processing of each instruction and the addressing of operands.

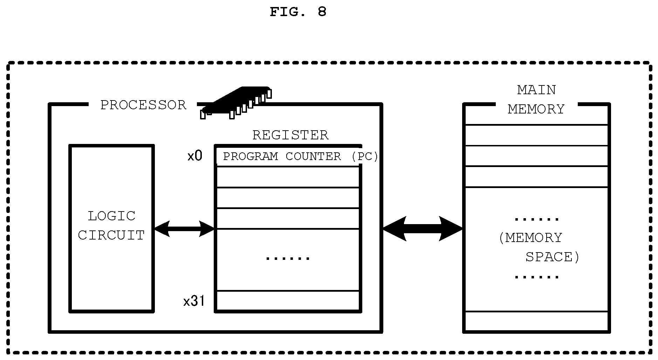

Fig. 8 is a diagram of a configuration of processor and memory. A computation processing system illustrated in Fig. 8 is made up of a processor and a main memory. The processor may be a PLD (Programmable Logic Device), an FPGA (Field Programmable Gate Array), or an LSI (Large Scale Integration) and may be described using a hardware description language that is capable of describing a design/configuration of a circuit for semiconductor chips. The hardware description languages have syntax and notation similar to those of programming languages, and can describe a configuration of elements included in a circuit, operation conditions of the elements, wiring among the elements, and so forth. Processor chips can be manufactured by writing, into a PLD, an FPGA, or an LSI, circuit diagrams described using such a hardware description language.

A processor is made up of a "logic circuit" serving as a combinational logic circuit, and a "register" serving as a sequential logic circuit. The processor functions as a finite state machine with the logic circuit and the register. In a case of a RISC-V, for example, the logic circuit is made up of a source code of a hardware description language or formed using wired logic. The number of registers is 32 of x0 to x31.

The main memory is, for example, DRAM (Dynamic Random-Access Memory), and is a volatile memory in which transistors and capacitors are combined. Access speed can be maximally increased by disposing the main memory near the processor.

PTL 1, for example, discloses a technology for converting data structures and codes of a CISC (Complex Instruction Set Computer) type processor so as to be applicable to a RISC type processor. In the technology, machine-language instructions are fetched from a series of addresses in a memory, and the machine-language instructions are decoded. Next, when a jump instruction is detected from among the fetched machine-language instructions, the address of the register that includes a target address of the jump destination (destination of the jump) is extracted. Then, before executing the jump instruction, a machine-language instruction is fetched from the target address that the register points to, not from among the series of addresses.

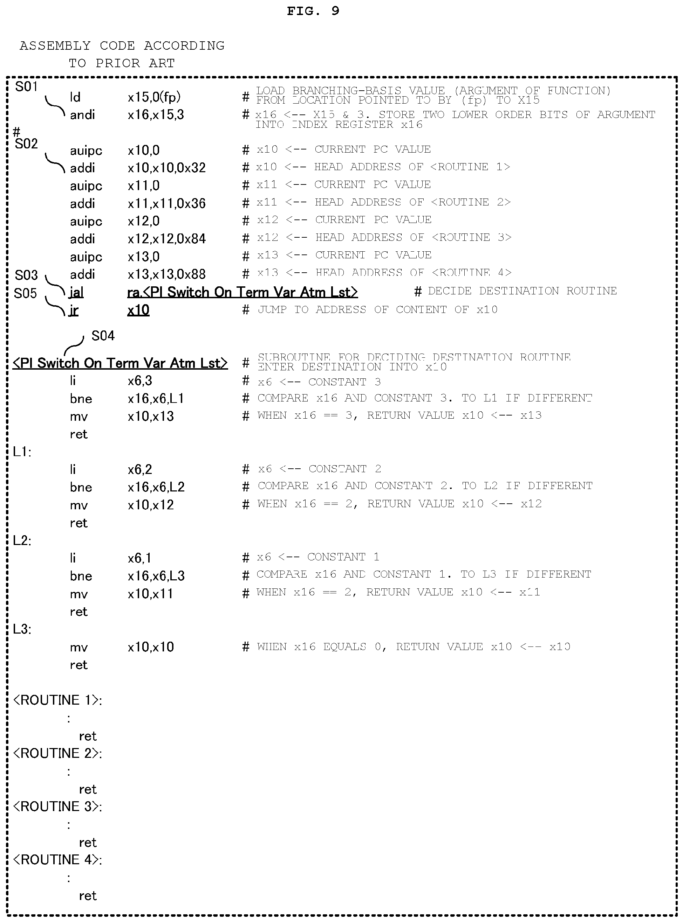

Fig. 9 is an example of assembly code including a conditional jump instruction according to the conventional art.

The assembly code shown in Fig. 9 is a general conditional jump subroutine that uses a dispatch table in indirect addressing. In the subroutine, argument fp of a branch is inputted. The subroutine uses registers x10 to x13 as a dispatch table including a plurality of jump destination addresses. Storing the dispatch table into registers located within the processor realizes high-speed access.

(S01) In the example shown in Fig. 9, there are four jump destinations. First, argument fp of the subroutine is stored into x15, and the two lower order bits of x15 (one of 00, 01, 10, and 11) are stored into x16. Four branch destinations can be selected by x16.

(S02) The current value (=0x400000) of the program counter (x0) is written to x10 by auipc. Then, the head address 0x0032 of routine 1 at the jump destination is added to x10, by addi, and the addition result (=0x400032) is written to x10. Next, the current value (=0x400008) of the program counter (x0) is written to x11 by auipc. Then, the head address 0x0036 of routine 2 at the jump destination is added to x11, by addi, and the addition result (=0x40003E) is written to x11. Next, the current value of the program counter (x0) is written to x12 (=0x4000010) by auipc. Then, the head address 0x0084 of routine 3 at the jump destination is added to x12, by addi, and the addition result (=0x400094) is written to x12. Next, the current value of the program counter (x0) is written to x13 (=0x400018) by auipc. Then, the head address 0x0088 of routine 4 at the jump destination is added to x13, by addi, and the addition result (=0x4000A0) is written to x13.

(S03) A subroutine call of destination routine (jump-to routine) <Pl_Switch_On_Term_Var_Atm_Lst> is performed by jal (Jump And Link).

(S04) In the destination routine (jump-to routine) <Pl_Switch_On_Term_Var_Atm_Lst>, first, 3 is stored into x6 by li. Then, x16 and x6 are compared by bne, and branching to L1 is performed if x16 and x6 differ. If x16 and x6 are the same, the address stored in x13 is stored into x10, which is to be the return value, and it is returned from the destination routine (jump-to routine). Next, 2 is stored into x6 by li. Then, x16 and x6 are compared by bne, and branching to L2 is performed if x16 and x6 differ. If x16 and x6 are the same, the address stored in x12 is stored into x10, which is to be the return value, and it is returned from the destination routine (jump-to routine). Next, 1 is stored into x6 by li. Then, x16 and x6 are compared by bne, and branching to L3 is performed if x16 and x6 differ. If x16 and x6 are the same, the address stored in x11 is stored into x10, which is to be the return value, and it is returned from the destination routine (jump-to routine). Finally, in L3, the address stored in x10 is stored into x10, which is to be the return value, and it is returned from the destination routine (jump-to routine).

(S05) After returning from the destination routine (jump-to routine) <Pl_Switch_On_Term_Var_Atm_Lst>, jumping to the address stored in x10 is performed by jr (Jump Register).

### [Citation List]

### [Patent Literature]

[PTL 1] Japanese Patent Application Laid-open No. H06-103067

### [Summary of Invention]

### [Technical Problem]

Generally, the number of callups for conditional jump subroutines is extremely great in the entire assembly code. It is not unusual for the same subroutine of conditional jump to be called up many times. As can be seen in Fig. 9, even though there is branching to a mere four jump destinations, the assembly code using registers involves 20 or more steps. The logic circuit of the processor repeats instruction fetching (Instruction Fetch), decoding (Instruction Decode), executing (Execute), and writing (Memory Access & Writeback), for each step. Accordingly, reducing the number of steps of the assembly code is desirable for higher speeds of processing by the processor, as well.

Accordingly, it is an object of the present disclosure to provide a processor, a program recording medium, and a method, that can reduce assembly code in an indirect-addressing-type conditional jump subroutine.

### [Solution to Problem]

According to the present disclosure, there is provided a processor including a logic circuit configured to execute a conditional jump instruction of assembly code under indirect addressing using plural registers including a program counter as a table, the processor being logically configured to execute, after storing, into an index register, an index register number that is an index to a jump-destination effective address, storing jump-destination effective addresses that differ from one another in memory space, or address offsets from a predetermined reference to jump-destination effective addresses that differ from one another, into plural reference registers, respectively, and fetching and decoding a conditional jump instruction that is one instruction that quotes the index register: a first step of acquiring a jump-destination effective address or an address offset from the reference register corresponding to the index register number that is a content of the index register; and a second step of setting the acquired jump-destination effective address, or a jump-destination effective address calculated from the acquired address offset, to a register serving as the program counter.

As another embodiment of the processor in the present disclosure, it is preferable that the processor is logically configured to execute, after storing, into an index register, an index register number that is an index to a jump-destination effective address, storing jump-destination effective addresses that differ from one another in memory space into plural reference registers, respectively, and fetching and decoding a conditional jump instruction that is one instruction that quotes the index register: a first step of acquiring a jump-destination effective address from the reference register corresponding to the index register number that is a content of the index register; and a second step of setting the jump-destination effective address to a register serving as the program counter.

As another embodiment of the processor in the present disclosure, it is preferable that the processor is logically configured to execute, after storing, into an index register, an index register number that is an index to a jump-destination effective address, storing address offsets from the program counter to jump-destination effective addresses that differ from one another into plural reference registers, respectively, and fetching and decoding a conditional jump instruction that is one instruction that quotes the index register: a first step of acquiring an address offset from the reference register corresponding to the index register number that is a content of the index register; and a second step of setting, to a register serving as the program counter, a jump-destination effective address that is a result of adding the address offset to the program counter.

As another embodiment of the processor in the present disclosure, it is preferable that the processor is logically configured to execute, after storing, into a base resister, a base address in memory space, storing, into an index register, an index register number that is an index to a jump-destination effective address, storing address offsets from the base address to jump-destination effective addresses that differ from one another into plural reference registers, respectively, and fetching and decoding a conditional jump instruction that is one instruction that quotes the index register and the base resister: a first step of acquiring an address offset from the reference register corresponding to the index register number that is a content of the index register; and a second step of setting, to a register serving as the program counter, a jump-destination effective address that is a result of adding the address offset to the base address of the base resister.

As another embodiment of the processor in the present disclosure, it is preferable that the logic circuit is configured by a source code described in a hardware description language or by wired logic.

According to the present disclosure, there is provided a non-transitory computer-readable recording medium on which is stored a program to cause a processor to function, the processor including a logic circuit configured to execute a conditional jump instruction of assembly code under indirect addressing using plural registers including a program counter as a table, the program causing the processor to execute, as an execution of a conditional jump instruction that is one instruction that quotes an index register in a situation that an index register number that is an index to a jump-destination effective address is stored into the index register, and jump-destination effective addresses that differ from one another in memory space, or address offsets from a predetermined reference to jump-destination effective addresses that differ from one another, are stored into plural reference registers, respectively: a first step of acquiring a jump-destination effective address or an address offset from the reference register corresponding to the index register number that is a content of the index register; and a second step of setting the acquired jump-destination effective address, or a jump-destination effective address calculated from the acquired address offset, to a register serving as the program counter.

As another embodiment of the recording medium in the present disclosure, it is preferable that the program causes the processor to execute, as an execution of a conditional jump instruction that is one instruction that quotes an index register in a situation that an index register number that is an index to a jump-destination effective address is stored into the index register, and jump-destination effective addresses that differ from one another in memory space are stored into plural reference registers, respectively:
a first step of acquiring a jump-destination effective address from the reference register corresponding to the index register number that is a content of the index register; and
a second step of setting the jump-destination effective address to a register serving as the program counter.

As another embodiment of the recording medium in the present disclosure, it is preferable that the program causes the processor to execute, as an execution of a conditional jump instruction that is one instruction that quotes an index register in a situation that an index register number that is an index to a jump-destination effective address is stored into the index register, and address offsets from the program counter to jump-destination effective addresses that differ from one another are stored into plural reference registers, respectively: a first step of acquiring an address offset from the reference register corresponding to the index register number that is a content of the index register; and a second step of setting, to a register serving as the program counter, a jump-destination effective address that is a result of adding the address offset to the program counter.

As another embodiment of the recording medium in the present disclosure, it is preferable that the program causes the processor to execute, as an execution of a conditional jump instruction that is one instruction that quotes an index register and an base resister in a situation that a base address in memory space is stored into the base resister, an index register number that is an index to a jump-destination effective address is stored into the index register, and address offsets from the base address to jump-destination effective addresses that differ from one another are stored into plural reference registers, respectively: a first step of acquiring an address offset from the reference register corresponding to the index register number that is a content of the index register; and a second step of setting, to a register serving as the program counter, a jump-destination effective address that is a result of adding the address offset to the base address of the base resister.

According to the present disclosure, there is provided a method for executing a conditional jump instruction of assembly code under indirect addressing, the method being implemented by a processor that includes a logic circuit configured by using plural registers including a program counter, the method comprising, as an execution of a conditional jump instruction that is one instruction that quotes an index register in a situation that an index register number that is an index to a jump-destination effective address is stored into the index register, and jump-destination effective addresses that differ from one another in memory space, or address offsets from a predetermined reference to jump-destination effective addresses that differ from one another, are stored into plural reference registers, respectively: a first step of acquiring a jump-destination effective address or an address offset from the reference register corresponding to the index register number that is a content of the index register; and a second step of setting the acquired jump-destination effective address, or a jump-destination effective address calculated from the acquired address offset, to a register serving as the program counter.

As another embodiment of the method for executing a conditional jump instruction in the present disclosure, it is preferable that the method for executing a conditional jump instruction comprises, as an execution of a conditional jump instruction that is one instruction that quotes an index register in a situation that an index register number that is an index to a jump-destination effective address is stored into the index register, and jump-destination effective addresses that differ from one another in memory space are stored into plural reference registers, respectively: a first step of acquiring a jump-destination effective address from the reference register corresponding to the index register number that is a content of the index register; and a second step of setting the jump-destination effective address to a register serving as the program counter.

As another embodiment of the method for executing a conditional jump instruction in the present disclosure, it is preferable that the method for executing a conditional jump instruction comprises, as an execution of a conditional jump instruction that is one instruction that quotes an index register in a situation that an index register number that is an index to a jump-destination effective address is stored into the index register, and address offsets from the program counter to jump-destination effective addresses that differ from one another are stored into plural reference registers, respectively: a first step of acquiring an address offset from the reference register corresponding to the index register number that is a content of the index register; and a second step of setting, to a register serving as the program counter, a jump-destination effective address that is a result of adding the address offset to the program counter.

As another embodiment of the method for executing a conditional jump instruction in the present disclosure, it is preferable that the method for executing a conditional jump instruction comprises, as an execution of a conditional jump instruction that is one instruction that quotes an index register and an base resister in a situation that a base address in memory space is stored into the base resister, an index register number that is an index to a jump-destination effective address is stored into the index register, and address offsets from the base address to jump-destination effective addresses that differ from one another are stored into plural reference registers, respectively: a first step of acquiring an address offset from the reference register corresponding to the index register number that is a content of the index register; and a second step of setting, to a register serving as the program counter, a jump-destination effective address that is a result of adding the address offset to the base address of the base resister.

### [Advantageous Effects of Invention]

According to the processor, program recording medium, and method, of the present disclosure, assembly code in an indirect-addressing-type conditional jump subroutine can be reduced, by implementing, in the processor, execution functions of a conditional jump instruction that is one instruction that quotes (refers to) an index register.

### [Brief Description of Drawings]

Fig. 1 is an example of assembly code including a conditional jump instruction according to the present disclosure;
Fig. 2 is a schematic diagram illustrating a specific example of the processor and the main memory according to the present disclosure, and a flowchart for a logic circuit according to the first embodiment;
Fig. 3 is a schematic diagram for explaining the contents of the register and the memory according to the first embodiment;
Fig. 4 is a flowchart of a logic circuit according to the second embodiment;
Fig. 5 is a schematic diagram for explaining the contents of the register and the memory according to the second embodiment;
Fig. 6 is a flowchart of a logic circuit according to the third embodiment;
Fig. 7 is a schematic diagram for explaining the contents of the register and the memory according to the third embodiment;
Fig. 8 is a diagram of a configuration of processor and memory; and
Fig. 9 is an example of assembly code including a conditional jump instruction according to the conventional art.

### [Description of Embodiments]

Hereinafter, embodiments for carrying out the present disclosure will be described in detail using the drawings.

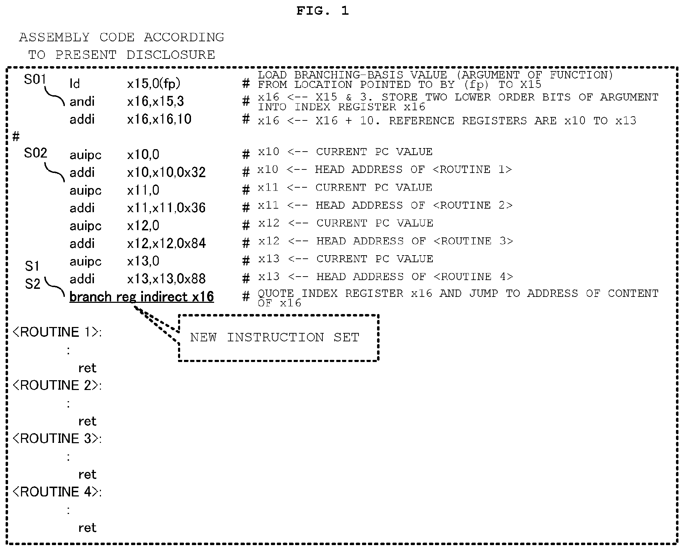

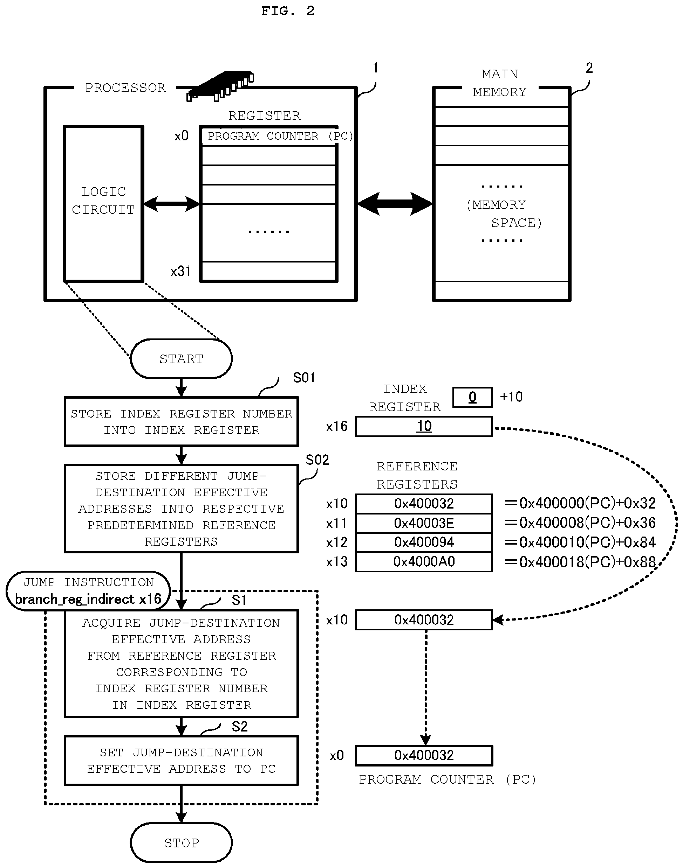

Fig. 1 is an example of assembly code including a conditional jump instruction according to the present disclosure. Here, the conditional jump instruction shown below is executed by a processor 1 illustrated in Fig. 2, which will be described later.

(S01) In the example shown in Fig. 1, there are four jump destinations, in the same ways as in S01 in Fig. 9. First, argument fp of the subroutine is stored into x15, and the two lower order bits of x15 (one of 00, 01, 10, and 11) are stored into x16. One of four branching destinations can be selected by x16. Here, according to the present disclosure, x16 is an index register. The index register is a register according to the content of which a branching/jump destination can be selected. Performing +10 to the index register x16 enables 10 to 13 to be expressed. By the result, reference registers x10 to x13 are identified.

(S02) According to Fig. 1, in the same way as S02 in Fig. 9, the current value (=0x400000) of the program counter (x0) is written to x10 by auipc. Then, the head address 0x0032 of routine 1 at the jump destination is added to x10, by addi, and the addition result (=0x400032) is written to x10. Next, the current value (=0x400008) of the program counter (x0) is written to x11 by auipc. Then, the head address 0x0036 of routine 2 at the jump destination is added to x11, by addi, and the addition result (=0x40003E) is written to x11. Next, the current value (=0x400010) of the program counter (x0) is written to x12 by auipc. Then, the head address 0x0084 of routine 3 at the jump destination is added to x12, by addi, and the addition result (=0x400094) is written to x12. Next, the current value (=0x400018) of the program counter (x0) is written to x13 by auipc. Then, the head address 0x0088 of routine 4 at the jump destination is added to x13, by addi, and the addition result (=0x4000A0) is written to x13.

(S1, S2) Executing a conditional jump instruction that is one instruction that quotes (refers to) the index register.

branch_reg_indirect x16 #Jump to the address in the content of index register x16 Here, branch_reg_indirect is an instruction set (machine-language instructions) newly configured according to the present disclosure. The logic circuit of the processor 1 according to the present disclosure fetches the newly-configured conditional jump instruction mentioned above, and thereafter decodes the machine-language instruction to generate control information. Next, steps S1 and S2 are executed, as will be described later, as an execution of the control information.

There are three following embodiments in the present disclosure.
<First Embodiment>: Storing the jump-destination effective address into the reference register.
<Second Embodiment>: Storing, into the reference register, the address offset from the program counter to the jump-destination effective address.
<Third Embodiment>: Storing, into the reference register, the address offset from the base address to the jump-destination effective address.

### <First Embodiment>

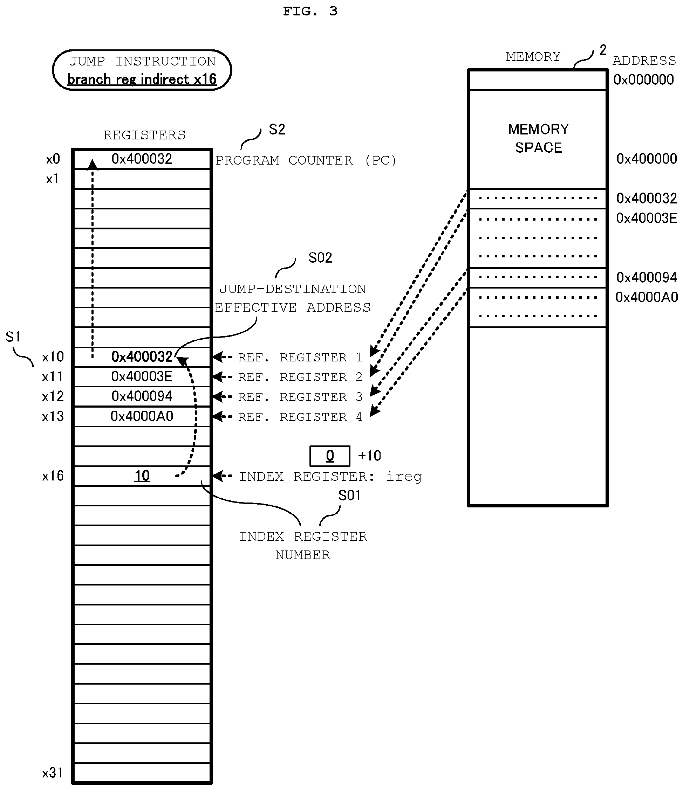

Fig. 2 is a schematic diagram illustrating a specific example of the processor 1 and the main memory 2 according to the present disclosure, and a flowchart for the logic circuit according to the first embodiment. Fig. 3 is a schematic diagram for explaining the contents of the register and the memory according to the first embodiment.

(S01) Storing, into the index register x16, index register number 10 serving as an index to a jump-destination effective address.

(S02) Next, Storing, into the reference registers x10 to x13, the jump-destination effective addresses that are different from one another in memory space, respectively.
Reference register x10 <- 0x400032
Reference register x11 <- 0x40003E
Reference register x12 <- 0x400094
Reference register x13 <- 0x4000A0

These steps S01 and S02 are the same as the steps S01 and S02 of the assembly code in Fig. 1 described earlier.

Next, the logic circuit of the processor 1 fetches, decodes, and executes the conditional jump instruction branch_reg_indirect x16 that is one instruction that quotes (refers to) the index register.

(S1) Acquiring the jump-destination effective address 0x400032 from the reference register x10 corresponding to the index register number 10 that is the content of the index register x16. (S2) Setting the jump-destination effective address 0x400032 to the register x0 that serves as a program counter.

In the first embodiment described above, a conditional jump can be realized by a subroutine with a short assembler code such as in Fig. 1 described earlier.

### <Second Embodiment>

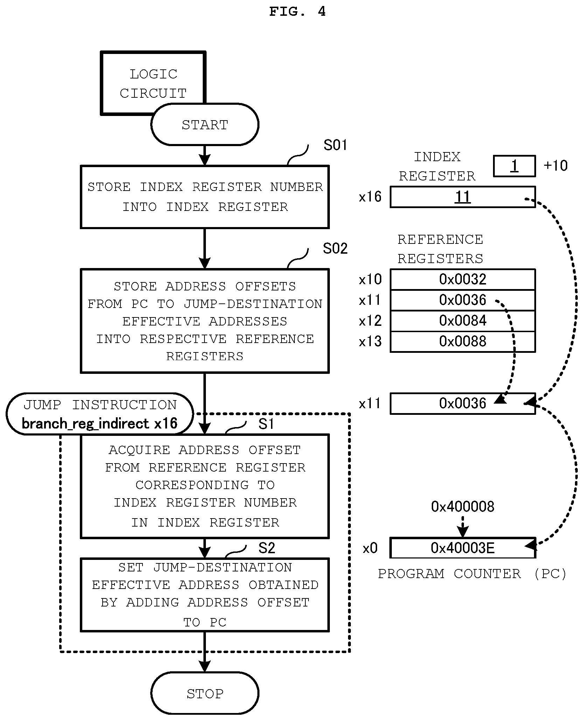

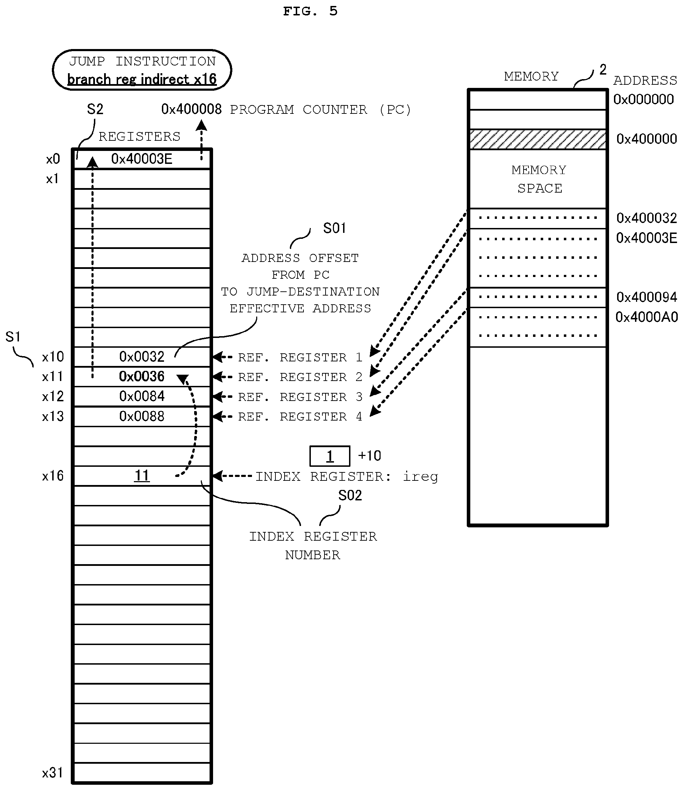

Fig. 4 is a flowchart for the logic circuit according to the second embodiment. Fig. 5 is a schematic diagram for explaining the contents of the register and the memory according to the second embodiment.

(S01) Storing, into the index register x16, index register number 11 serving as an index to a jump-destination effective address.

(S02) Next, storing, into the reference registers x10 to x13, address offsets from the program counter to the jump-destination effective addresses that are different from one another in memory space, respectively.
Reference register x10 <- 0x0032
Reference register x11 <- 0x0036
Reference register x12 <- 0x0084
Reference register x13 <- 0x0088

Next, the logic circuit of the processor 1 fetches, decodes, and executes the conditional jump instruction branch_reg_indirect x16 that is one instruction that quotes (refers to) the index register.

(S1) Acquiring the address offset 0x0036 from the reference register x11 corresponding to the index register number 11 that is the content of the index register x16.

(S2) Setting, to the register x0 that serves as a program counter, the jump-destination effective address 0x40003E that is the result of adding the address offset 0x0036 to the program counter 0x400008.

In the second embodiment described above as well, a conditional jump can be realized by a subroutine with a short assembler code.

### <Third Embodiment>

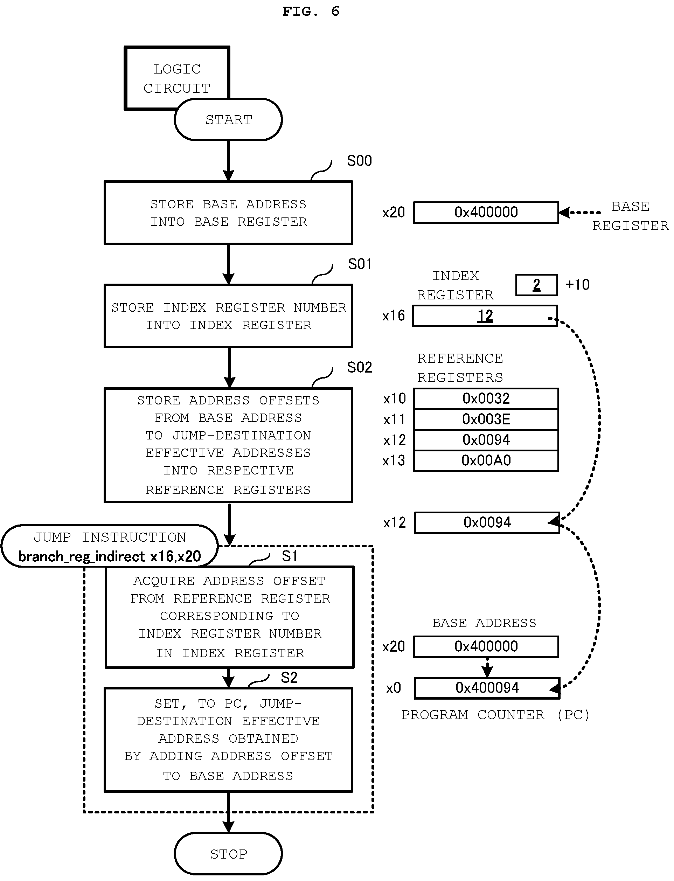

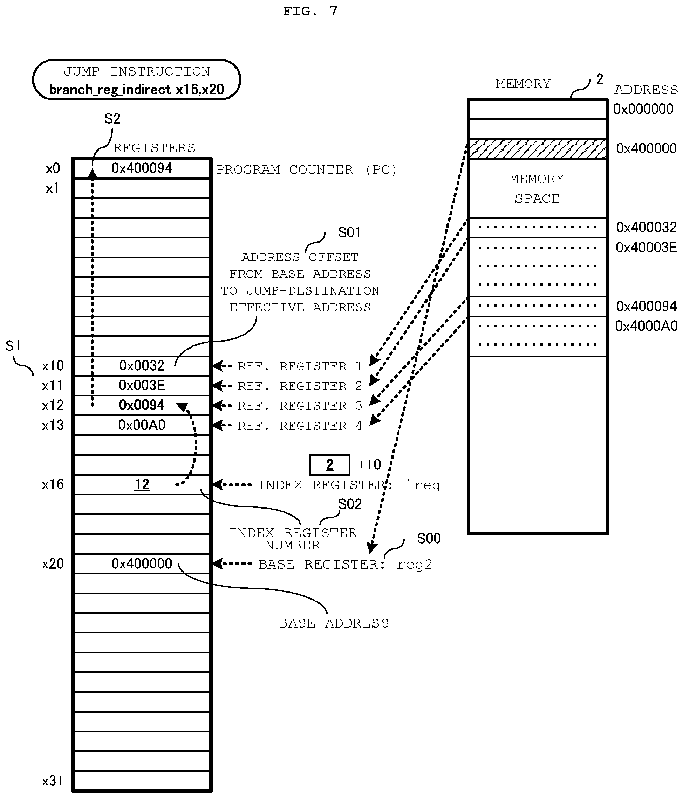

Fig. 6 is a flowchart for the logic circuit according to the third embodiment. Fig. 7 is a schematic diagram for explaining the contents of the register and the memory according to the third embodiment.

(S00) Storing a base address 0x400000 in memory space into x20, which is an arbitrarily-selected base register.

(S01) Next, storing, into the index register x16, index register number 12 serving as an index to the jump-destination effective address.

(S02) Storing, into the reference registers x10 to x13, address offsets from the base address 0x400000 to the jump-destination effective addresses that are different from one another, respectively.
Reference register x10 <- 0x0032
Reference register x11 <- 0x003E
Reference register x12 <- 0x0094
Reference register x13 <- 0x00A0

Next, the logic circuit of the processor 1 fetches, decodes, and executes the conditional jump instruction branch_reg_indirect x16 that is one instruction that quotes (refers to) the index register x16 and the base register x20.

(S1) Acquiring the address offset 0x0094 from the reference register x12 corresponding to the index register number 12 that is the content of the index register x16.

(S2) Setting, to the register x0 that serves as a program counter, the jump-destination effective address 0x400094 that is the result of adding the address offset 0x0094 to the base address 0x400000 stored in the base register x20.

In the third embodiment described above as well, a conditional jump can be realized by a subroutine with a short assembler code.

Note that the logic circuit of the processor 1 according to the present disclosure is described using the source code of a hardware description language. Following compiling thereof, the source code is converted into an execution format by being "linked" with a plurality of libraries. The logic circuit of the processor 1 is not limited to being described in a hardware description language, and can be realized by using wired logic, as a matter of course.

According to the present disclosure, higher speeds in processing can be realized in particular with respect to interpreter of Java (registered trademark) virtual machine (VM), Lisp machine, Prolog precompiled machine-language code, and so forth. That is to say, from control information of Java virtual machine, corresponding processing routines can be dispatched with high speed. In the interpreter system, machine-language instructions are successively processed, and accordingly, the load becomes great and high-speed processing is difficult. Java virtual machine interpreter and Lisp mostly dispatch machine-language routines by referencing tag information added to data/objects. According to the present disclosure, the machine-language instructions of the dispatched-with-tag portion can be directly generated as control information of a RISC processor, for example. Also, directly describing such control information in a reference register group serving as a table enables a branch code portion that is described for a conditional jump (or subroutine) to be realized by one conditional jump instruction. As a result, high-speed processing can be realized.

As described above in detail, according to the processor, program, and method, according to the present disclosure, assembly code regarding a conditional jump instruction can be reduced, by implementing, in processor, execution functions of a conditional jump instruction that is one instruction that quotes (refers to) an index register.

The foregoing embodiments are by way of examples of the present disclosure only and are not intended to limit thereto, thus many widely different alternations and modifications of the present disclosure may be constructed. Accordingly, the present disclosure is to be limited only as defined by the following claims and equivalents thereto.

### [Reference Signs List]

| | | | |
|---|---|---|---|
| 1 | processor; and | 2 | main memory. |

## Claims

1. A processor (1) including a logic circuit configured to execute a conditional jump instruction of assembly code under indirect addressing using plural registers including a program counter as a table,
**characterized in that** the processor (1) is logically configured to execute, after storing, into an index register, an index register number that is an index to a jump-destination effective address, storing jump-destination effective addresses that differ from one another in memory (2) space, or address offsets from a predetermined reference to jump-destination effective addresses that differ from one another, into plural reference registers, respectively, and fetching and decoding a conditional jump instruction that is one instruction that quotes the index register:
a first step (S1) of acquiring a jump-destination effective address or an address offset from the reference register corresponding to the index register number that is a content of the index register; and
a second step (S2) of setting the acquired jump-destination effective address, or a jump-destination effective address calculated from the acquired address offset, to a register serving as the program counter.

2. The processor (1) as claimed in claim 1, logically configured to execute, after storing, into an index register, an index register number that is an index to a jump-destination effective address, storing jump-destination effective addresses that differ from one another in memory (2) space into plural reference registers, respectively, and fetching and decoding a conditional jump instruction that is one instruction that quotes the index register:
a first step (S1) of acquiring a jump-destination effective address from the reference register corresponding to the index register number that is a content of the index register; and
a second step (S2) of setting the jump-destination effective address to a register serving as the program counter.

3. The processor (1) as claimed in claim 1, logically configured to execute, after storing, into an index register, an index register number that is an index to a jump-destination effective address, storing address offsets from the program counter to jump-destination effective addresses that differ from one another into plural reference registers, respectively, and fetching and decoding a conditional jump instruction that is one instruction that quotes the index register:
a first step (S1) of acquiring an address offset from the reference register corresponding to the index register number that is a content of the index register; and
a second step (S2) of setting, to a register serving as the program counter, a jump-destination effective address that is a result of adding the address offset to the program counter.

4. The processor (1) as claimed in claim 1, logically configured to execute, after storing, into a base resister, a base address in memory (2) space, storing, into an index register, an index register number that is an index to a jump-destination effective address, storing address offsets from the base address to jump-destination effective addresses that differ from one another into plural reference registers, respectively, and fetching and decoding a conditional jump instruction that is one instruction that quotes the index register and the base resister:
a first step (S1) of acquiring an address offset from the reference register corresponding to the index register number that is a content of the index register; and
a second step (S2) of setting, to a register serving as the program counter, a jump-destination effective address that is a result of adding the address offset to the base address of the base resister.

5. The processor (1) as claimed in claim 1, wherein the logic circuit is configured by a source code described in a hardware description language or by wired logic.

6. A non-transitory computer-readable recording medium on which is stored a program to cause a processor (1) to function, the processor (1) including a logic circuit configured to execute a conditional jump instruction of assembly code under indirect addressing using plural registers including a program counter as a table,
**characterized in that** the program causes the processor (1) to execute, as an execution of a conditional jump instruction that is one instruction that quotes an index register in a situation that an index register number that is an index to a jump-destination effective address is stored into the index register, and jump-destination effective addresses that differ from one another in memory (2) space, or address offsets from a predetermined reference to jump-destination effective addresses that differ from one another, are stored into plural reference registers, respectively:
a first step (S1) of acquiring a jump-destination effective address or an address offset from the reference register corresponding to the index register number that is a content of the index register; and
a second step (S2) of setting the acquired jump-destination effective address, or a jump-destination effective address calculated from the acquired address offset, to a register serving as the program counter.

7. The recording medium as claimed in claim 6, the program causing the processor (1) to execute, as an execution of a conditional jump instruction that is one instruction that quotes an index register in a situation that an index register number that is an index to a jump-destination effective address is stored into the index register, and jump-destination effective addresses that differ from one another in memory (2) space are stored into plural reference registers, respectively:
a first step (S1) of acquiring a jump-destination effective address from the reference register corresponding to the index register number that is a content of the index register; and
a second step (S2) of setting the jump-destination effective address to a register serving as the program counter.

8. The recording medium as claimed in claim 6, the program causing the processor (1) to execute, as an execution of a conditional jump instruction that is one instruction that quotes an index register in a situation that an index register number that is an index to a jump-destination effective address is stored into the index register, and address offsets from the program counter to jump-destination effective addresses that differ from one another are stored into plural reference registers, respectively:
a first step (S1) of acquiring an address offset from the reference register corresponding to the index register number that is a content of the index register; and
a second step (S2) of setting, to a register serving as the program counter, a jump-destination effective address that is a result of adding the address offset to the program counter.

9. The recording medium as claimed in claim 6, the program causing the processor (1) to execute, as an execution of a conditional jump instruction that is one instruction that quotes an index register and an base resister in a situation that a base address in memory (2) space is stored into the base resister, an index register number that is an index to a jump-destination effective address is stored into the index register, and address offsets from the base address to jump-destination effective addresses that differ from one another are stored into plural reference registers, respectively:
a first step (S1) of acquiring an address offset from the reference register corresponding to the index register number that is a content of the index register; and
a second step (S2) of setting, to a register serving as the program counter, a jump-destination effective address that is a result of adding the address offset to the base address of the base resister.

10. A method for executing a conditional jump instruction of assembly code under indirect addressing, the method being implemented by a processor (1) that includes a logic circuit configured by using plural registers including a program counter,
**characterized in that** the method comprises, as an execution of a conditional jump instruction that is one instruction that quotes an index register in a situation that an index register number that is an index to a jump-destination effective address is stored into the index register, and jump-destination effective addresses that differ from one another in memory (2) space, or address offsets from a predetermined reference to jump-destination effective addresses that differ from one another, are stored into plural reference registers, respectively:
a first step (S1) of acquiring a jump-destination effective address or an address offset from the reference register corresponding to the index register number that is a content of the index register; and
a second step (S2) of setting the acquired jump-destination effective address, or a jump-destination effective address calculated from the acquired address offset, to a register serving as the program counter.

11. The method for executing a conditional jump instruction as claimed in claim 10, the method comprising, as an execution of a conditional jump instruction that is one instruction that quotes an index register in a situation that an index register number that is an index to a jump-destination effective address is stored into the index register, and jump-destination effective addresses that differ from one another in memory (2) space are stored into plural reference registers, respectively:
a first step (S1) of acquiring a jump-destination effective address from the reference register corresponding to the index register number that is a content of the index register; and
a second step (S2) of setting the jump-destination effective address to a register serving as the program counter.

12. The method for executing a conditional jump instruction as claimed in claim 10, the method comprising, as an execution of a conditional jump instruction that is one instruction that quotes an index register in a situation that an index register number that is an index to a jump-destination effective address is stored into the index register, and address offsets from the program counter to jump-destination effective addresses that differ from one another are stored into plural reference registers, respectively:
a first step (S1) of acquiring an address offset from the reference register corresponding to the index register number that is a content of the index register; and
a second step (S2) of setting, to a register serving as the program counter, a jump-destination effective address that is a result of adding the address offset to the program counter.

13. The method for executing a conditional jump instruction as claimed in claim 10, the method comprising, as an execution of a conditional jump instruction that is one instruction that quotes an index register and an base resister in a situation that a base address in memory (2) space is stored into the base resister, an index register number that is an index to a jump-destination effective address is stored into the index register, and address offsets from the base address to jump-destination effective addresses that differ from one another are stored into plural reference registers, respectively:
a first step (S1) of acquiring an address offset from the reference register corresponding to the index register number that is a content of the index register; and
a second step (S2) of setting, to a register serving as the program counter, a jump-destination effective address that is a result of adding the address offset to the base address of the base resister.
